# EUROPÄISCHE PATENTSCHRIFT

(11) **EP 2 174 002 B1**
(45) Veröffentlichungstag und Bekanntmachung des Hinweises auf die Patenterteilung: **06.06.2018**
(21) Anmeldenummer: 08784528.5
(22) Anmeldetag: 20.06.2008
(51) Int. Cl.: F03B 13/18, H02K 7/18

(54) **WANDLER UND VERFAHREN ZUM WANDELN VON MECHANISCHER ENERGIE IN ELEKTRISCHE ENERGIE**
CONVERTER AND METHOD FOR CONVERTING MECHANICAL ENERGY INTO ELECTRICAL ENERGY
CONVERTISSEUR ET PROCÉDÉ DE CONVERSION D'ÉNERGIE MÉCANIQUE EN ÉNERGIE ÉLECTRIQUE

(30) Priorität: 02.07.2007 DE 102007030663; 27.08.2007 DE 102007040338; 23.11.2007 DE 102007056400
(43) Veröffentlichungstag der Anmeldung: 14.04.2010
(73) Patentinhaber: Robert Bosch GmbH, 70469 Stuttgart (DE)
(72) Erfinder: SCHARMANN, Nik, 97082 Würzburg (DE); ZIMMERMANN, Stefan, 97753 Karlstadt (DE); LANGENSTEIN, Christian, 63846 Laufach (DE); VERDEGEM, Louis, Longthorpe PE3 6SS (GB)
(74) Vertreter: Thürer, Andreas
(86) Internationale Anmeldenummer: PCT/EP2008/004988
(87) Internationale Veröffentlichungsnummer: WO 2009/003598

(56) Entgegenhaltungen:
- WO-A-85/04219
- WO-A-2005/069824
- NL-C1- 1 002 765
- US-A- 4 531 063
- US-A1- 2002 047 273
- US-B1- 6 812 588

## Beschreibung

Die Erfindung betrifft einen hydraulisch/elektrischen Wandler gemäß dem Oberbegriff des Patentanspruches 1 und ein Verfahren zum Wandeln von mechanischer Energie in elektrische Energie mittels eines Wandlers gemäß dem Oberbegriff des nebengeordneten Patentanspruches 21.

Hydraulisch/elektrische Wandler werden beispielsweise bei Wellengeneratoren eingesetzt, wie sie in der US 6,300,698 B1 beschrieben sind. Der bekannte Wellengenerator hat einen Hydrozylinder, der mit einer Boje in Wirkverbindung steht, so dass der Hydrozylinder durch den Wellengang und die entsprechende Bewegung der Boje betätigt und Druckmittel in einen Hydraulikkreis gefördert wird. Dem Hydrozylinder ist ein hydraulischer Gleichrichter zugeordnet, so dass unabhängig von der Bewegungsrichtung des Hydrozylinders Druckmittel in den Hydraulikkreis gefördert wird, um einen dem hydraulischen Gleichrichter nachgeschalteten Hydrospeicher aufzuladen und einen Konstantmotor anzutreiben. Die Abtriebswelle dieses Konstantmotors ist mit einem Generator verbunden, so dass die hydraulische Energie im vorbeschriebenen Hydraulikkreis in elektrische Energie umgewandelt wird. Da der Wellengang sowohl hinsichtlich der Wellenhöhe als auch der Frequenz stark variiert, muss eine aufwendige elektronische Schaltung zur Vergleichmäßigung der Generator-Ausgangsspannung vorgesehen werden.

In der nachveröffentlichten Patentanmeldung 10 2007 018 600 der Anmelderin ist ein Wandler mit einer vom Wellengang angetriebenen Pumpe offenbarte, über die ein Hydrospeicher aufladbar und ein Hydromotor antreibbar ist, der seinerseits einen Generator antreibt. Der Hydromotor ist bei dieser Lösung an ein Drucknetz angeschlossen und drehzahlgeregelt ausgeführt, so dass der Generator durch Verstellen des Schwenkwinkels des Hydromotors in Abhängigkeit von hydraulikseitigen Druckschwankungen in weitem Umfang mit einer vorgegebenen Drehzahl angetrieben werden kann. Derartige Systeme mit einem an einem Drucknetz betriebenen drehzahlgeregelten Verstellmotor werden auch als Sekundärregelung bezeichnet, wobei die Drehzahl des Verstellmotors so geregelt ist, dass sie unabhängig vom jeweiligen Lastdruck bei dem im Drucknetz anliegenden Druck erreicht wird. Dieser Druck ist im Wesentlichen vom Ladezustand des Hydrospeichers abhängig. Dabei muss das Schluckvolumen des Hydromotors solange verändert werden, bis ein Gleichgewicht des Motordrehmoments mit der Last besteht und gleichzeitig die Solldrehzahl erreicht ist.

Die Druckschrift US 4 531 063, die als nächstliegender Stand der Technik angesehen wird, offenbart die Merkmale des Oberbegriffs des Anspruchs 1.

Durch diese Art der Drehzahlregelung ist ein erheblicher vorrichtungs- und regelungstechnischer Aufwand für den Wandler erforderlich.

Demgegenüber liegt der Erfindung die Aufgabe zugrunde, einen Wandler und ein Verfahren zu schaffen, über die mit geringem vorrichtungstechischen Aufwand eine oszillierende Naturkraft, beispielsweise Wellengang ausgenutzt werden kann, um elektrische Energie bereit zu stellen.

Diese Aufgabe wird hinsichtlich des Wandlers durch die Merkmalskombination des Patentanspruches 1 und hinsichtlich des Verfahrens durch die Merkmale des nebengeordneten Patentanspruches 21 gelöst.

Erfindungsgemäß hat der Wandler eine von der oszillierenden Naturkraft, beispielsweise Wellengang, angetriebene Pumpe, über die eine mit zumindest einer Hydromaschine ausgeführte Hydromaschinenanordnung antreibbar ist, die ihrerseits mit einer elektrischen Maschine zum Umwandeln der mechanischen Energie in elektrische Energie gekoppelt ist. Der Wandler ist mit einem Regelkreis ausgeführt, über den die verstellbare Hydromaschine derart verstellbar ist, dass der Kolben der Kolbenpumpe mit einer vorbestimmten Kraft oder einer vorbestimmten Druckdifferenz beaufschlagt ist. Diese Druck- oder Kraftregelung erfolgt derart, dass bei der eingeregelten Kraft bzw. dem eingeregelten Druck eine optimale Umsetzung der von der Naturkraft (Wellengang) eingetragenen Energie in hydraulische Energie gewährleistet ist. Dementsprechend ist der eingeregelte Druck oder die eingeregelte Kraft in Abhängigkeit von den Oszillationsparametern der Naturkraft (Wellengang) veränderlich. Die Erfindung löst sich somit von den eingangs beschriebenen Konzepten, bei denen die Generatordrehzahl mit vergleichsweise großem Aufwand geregelt wurde und zielt praktisch darauf ab, dass die Pumpe, beispielsweise die Kraft-Hub-Kennlinie einer Kolbenpumpe in Abhängigkeit von den Oszillationsparametern im Hinblick auf eine optimale Wandlung der mechanischen Energie in hydraulische Energie eingestellt ist. Eine derartige Druck-/Kraftregelung lässt sich mit äußerst geringem Aufwand realisieren.

Bei einem bevorzugten Ausführungsbeispiel der Erfindung ist die Pumpe als Kolbenpumpe, vorzugsweise als Gleichgangzylinder oder Plungerpumpe ausgeführt, deren Druckräume jeweils über eine Druckleitung mit Anschlüssen der Hydromaschine verbunden sind.

Zur Vermeidung von Kavitationen in dem sich vergrößernden Druckraum bei sehr schnellen Kolbenbewegungen kann in den Druckleitungen jeweils ein Hydrospeicher vorgesehen werden.

Bei einem Ausführungsbeispiel ist die Hydromaschinenanordnung mit zwei kleinen Hydromaschinen ausgeführt. Derartige kleine Hydromaschinen haben bei gleichem Fördervolumen den Vorteil, dass sie bei einem größeren Wirkungsgrad als eine Hydromaschine mit vergleichsweise großem Fördervolumenstrom arbeiten. Der maximale Fördervolumenstrom wird bei dieser Variante durch gleichzeitiges Ansteuern beider Hydromaschinen zur Verfügung gestellt.

Erfindungsgemäß können beide Hydromaschinen synchron oder unterschiedlich voneinander angesteuert werden. Bei der zuletzt genannten Alternative kann die zweite Hydromaschine Drehmoment geregelt sein, während dann die erst genannte Hydromaschine - wie eingangs erläutert - Kraft oder Druck geregelt ist.

Die zweite Hydromaschine wird bei einer Variante der Erfindung erst dann angesteuert, wenn der Druckmittelvolumenstrom nicht mehr über die erstgenannte Hydromaschine geführt werden kann - diese ist dann auf maximales Schluck- bzw. Fördervolumen eingestellt

Gemäß einer Variante der Erfindung kann der zweiten Hydromaschine hochdruckseitig ein Druckspeicher zugeordnet sein. Da die Hoch- und Niederdruckseiten bei den Wandlern aufgrund der Wellenbewegung sich ständig ändern, muss dann diesem Druckspeicher ein hydraulischer Gleichrichter zugeordnet sein.

Zum Ausgleich von Leckageverlusten, zur Vermeidung von Kavitationen im Niederdruckzweig und zum Austausch des Druckmittels im Druckmittelkreis kann der Wandler mit einer Speise-/Spüleinheit verbunden werden, über die die mit der eingangs genannten Pumpe verbundenen Druckleitungen mit dem Tank oder einer Speisepumpe verbindbar sind, um Druckmittel nachzufördern oder zum Tank hin abströmen zu lassen, so dass beispielsweise eine Überhitzung des Druckmittels verhindert ist.

Zur hydraulischen Absicherung des Wandlers können zwischen den beiden Druckleitungen gegenläufig öffnende Druckbegrenzungsventile angeordnet sein, die bei Überschreiten eines Maximaldrucks in einer Druckleitung eine Druckmittelverbindung zur anderen Druckleitung öffnen.

In einem Verbindungsstrang zwischen der Hydromaschine und der elektrischen Maschine ist vorzugsweise eine Kupplung vorgesehen, die derart ausgelegt ist, dass Drehmomentschwankungen gefedert und/oder gedämpft werden.

Die Hydromaschine ist vorzugsweise im Vierquadrantenbetrieb betreibbar, so dass auf einen hydraulischen oder elektrischen Gleichrichter verzichtet werden kann. Mit einer derartigen Hydromaschine kann im Bereich der Totpunkte der Kolbenpumpe der Schwenkwinkel über 0 verstellt werden, so dass die Drehrichtung der Hydromaschine bei Umkehrung der Kolbenbewegungsrichtung beibehalten bleibt.

Bei der erfindungsgemäßen Lösung wird es bevorzugt, wenn die als elektrische Maschine mit einer vorgegebenen, in etwa konstanten Drehzahl umläuft. Diese Drehzahl ist beispielsweise durch die Frequenz des Netzes vorgegeben, an das die elektrische Maschine angeschlossen ist.

Der Wandler wird vorzugsweise bei einem Wellengenerator eingesetzt, bei dem der Wellengang auf einen Schwimmkörper wirkt, über den die Kolbenpumpe entsprechend der Hubbewegung des Schwimmkörpers angetrieben wird.

Gemäß einem erfindungsgemäßen Konzept erfolgt die Kraftregelung derart, dass das in Absenkrichtung wirkende Eigengewicht des Wellengenerators, insbesondere das Eigengewicht des Schwimmkörpers kompensierbar ist.

Zur Regelung des Drucks in den Druckräumen der Kolbenpumpe können Druckaufnehmer zur Messung des Drucks in den jeweiligen Druckräumen vorgesehen sein.

In dem Verbindungsstrang zwischen der Hydromaschine und der elektrischen Maschine kann zum Ausgleich von Drehmomentschwankungen eine Schwungmasse vorgesehen sein. In diesem Fall ist es bevorzugt, die elektrische Maschine als Asynchronmaschine auszuführen.

Zur Erhöhung der Betriebssicherheit des Wandlers kann die Regelung so ausgelegt sein, dass bei sehr großen Amplituden der oszillierenden Naturkraft, beispielsweise bei sehr hohen Wellen, der Kolben der Kolbenpumpe vor Erreichen des Totpunktes durch Erhöhen der auf sie wirkenden Kraft gebremst wird, so dass ein auf Anschlaggehen der Kolbenpumpe verhindert wird.

Die auf die Kolbenpumpe wirkende Kraft wird im Wesentlichen durch Verstellen des Schwenkwinkels des Hydromotors eingeregelt.

Bei einem erfindungsgemäßen Steuerkonzept geht in das Steuersignal zur Ansteuerung der Hydromaschine - d.h. bei einer Axialkolbenpumpe das Steuersignal zur Verstellung des Schwenkwinkels - ein Ausgangssignal eines Kraft- oder Druckreglers sowie ein Pilotsignal ein, dass beispielsweise in Abhängigkeit von der Bewegungsgeschwindigkeit einer vom Wellengang bewegten Masse oder einer Kolbgeschwindigkeit der Pumpe generiert wird, so dass die Hydromaschine in Abhängigkeit von diesem Piiotwert bereits vorab eingestellt wird und dann über das Ausgangssignal des Druckreglers lediglich noch das Vorspannen des Systems nach der gewünschten Kraftregelung oder einer sonstigen Regelgröße erfolgt.

Das resultierende Steuersignal kann dann noch in geeigneter Weise über eine nicht lineare Adaption an die Bedingungen angepasst und dann einem Stellgerät zur Schwenkwinkelverstellung oder dergleichen zugeführt werden.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltschema eines erfindungsgemäßen hydraulisch/elektrischen Wandlers (Wellengenerator),
Figur 2 ein Diagramm, bei dem die von einem Wellengang erzeugte Kraft in Abhängigkeit von der Zeit dargestellt ist;
Figur 3 die an einer Abtriebswelle einer Hydromaschine des Wandlers messbare Leistung in Abhängigkeit von der Zeit;
Figur 4 eine Variante des Wandlers aus Figur 1;
Figur 5 ein Ausführungsbeispiel eines Wandlers mit zwei synchron angesteuerten Hydromaschinen;
Figur 6 eine Speisespüleinheit sowie eine Druckabsicherung des Wandlers aus Figur 5;
Figur 7 eine Variante des in Figur 5 dargestellten Wandlers, wobei die beiden Hydromaschinen unterschiedlich angesteuert werden;
Figur 8 einen Steuerkreis einer Regeleinheit des Wandlers aus Figur 7 und
Figur 9 ein weiteres Ausführungsbeispiel eines Wandlers mit zwei vergleichsweise kleinen Hydromaschinen.

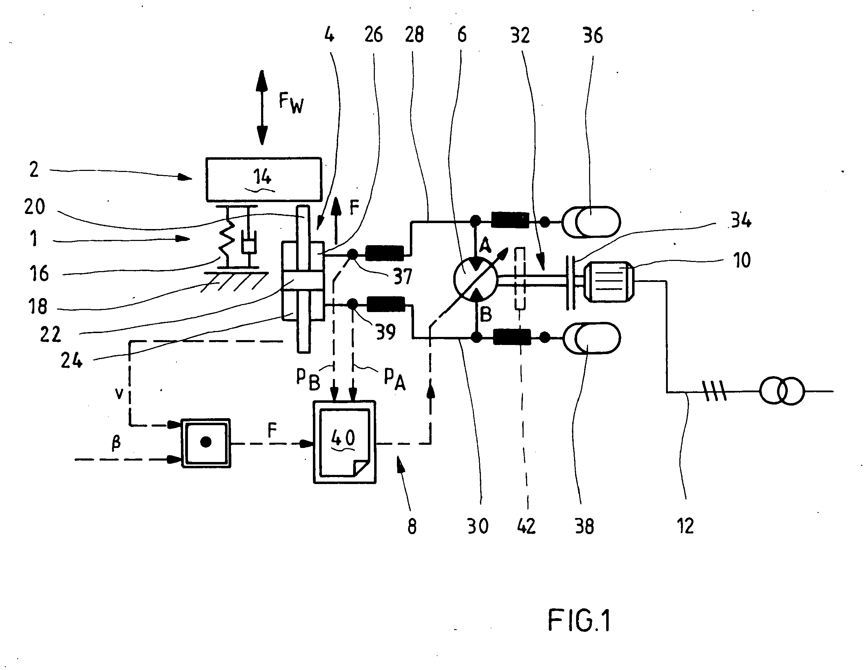

Bei dem im Folgenden beschriebenen Ausführungsbeispiel ist der hydraulisch/elektrische Wandler als Wellengenerator 1 ausgeführt, über den im Wellengang gespeicherte Energie in hydraulische Energie und dann in elektrische Energie wandelbar ist. Dieser Wellengenerator 1 besteht im Wesentlichen aus einem Schwimmkörper 2, dessen durch den Wellengang verursachte oszillierende Bewegung auf eine Kolbenpumpe übertragen wird, die beim dargestellten Ausführungsbeispiel als Gleichgangzylinder (Plungerpumpe) 4 ausgeführt ist. Dieser ist über einen geschlossenen hydraulischen Kreislauf mit einer Hydromaschine 6 verbunden, deren Schwenkwinkel zur Veränderung des Förder-/Schluckvolumens verstellbar ist. Diese Hydromaschine 6 kann beispielsweise in Axialkolbenbauweise ausgeführt sein. Der Schwenkwinkel der Hydromaschine 6 wird über einen Regelkreis 8 verstellt, über den die auf den Gleichgangzylinder 4 wirkende Kraft eingeregelt wird. Die Hydromaschine 6 ist mit einer elektrischen Maschine kraftgekoppelt, die im Folgenden als Generator 10 bezeichnet wird. Dieser wird in der Regel von der Hydromaschine 6 angetrieben, so dass die generierte elektrische Energie in ein in Figur 1 mit dem Bezugszeichen 12 angedeutetes Netz eingespeist werden kann.

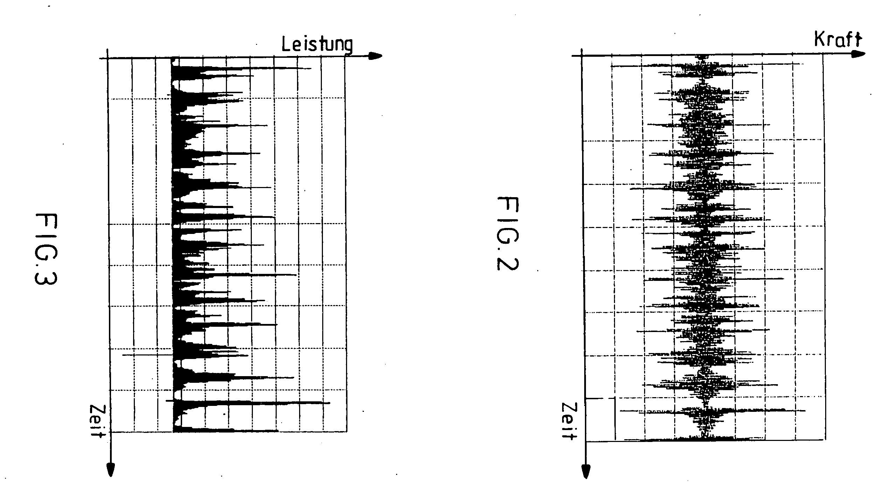

Als Schwimmkörper 2 kann beispielsweise eine Konstruktion verwendet werden, wie sie von der Firma Archimedes Wave Swing, Ltd. Entwickelt wurde. Ein derartiger Schwimmkörper 2 ist am Meeresboden 18 verankert und vollständig unter Wasser angeordnet, wobei eine Schwingmasse 14 über den Wellengang von einer Kraft FW beaufschlagt wird, wobei diese Kraft entsprechend dem Wellengang unregelmäßig sowohl in der Amplitude als auch in der Frequenz oszilliert. Ein derartiger, für das jeweilige Wellenklima typischer unregelmäßiger Kraftverlauf ist im Diagramm gemäß Figur 2 dargestellt. Derartige Kraft-Zeitverläufe lassen sich über geeignete Modellrechnungen praktisch für jedes Wellenklima näherungsweise oder idealisiert berechnen. Die FT-Profile werden dann in einem Datenspeicher abgelegt und bei der im Folgenden beschriebenen Regelung berücksichtigt.

Wie des Weiteren der schematischen Darstellung in Figur 1 entnehmbar ist, wird die Auf- und Abbewegung des Schwimmkörpers 14 über ein Feder-/Dämpfungssystem 16 geführt, so dass hochfrequente Schwankungen oder übermäßige Beschleunigungen unterdrückt oder verringert werden. Hinsichtlich weiterer Einzelheiten zum Aufbau derartiger Schwimmkörper 2 sei auf die Domain der Firma AWS Ocean Energy (www.awsocean.com) verwiesen, so dass weitere Ausführungen entbehrlich sind.

Die Schwingmasse 14 des Schwimmkörpers 2 wirkt auf eine Kolbenstange 20 eines Kolbens 22 des Gleichgangzylinders 4, so dass dieser der Vertikalbewegung der Schwingmasse 14 folgt. Der Kolben 22 unterteilt den Gleichgangzylinder 4 in zwei Ringräume 24, 26, die über Druckleitungen 28 bzw. 30 mit Anschlüssen A bzw. B der Hydromaschine 6 verbunden sind. Diese kann im Vierquadrantehbetrieb laufen, so dass sowohl Drehrichtung als auch Momentenrichtung umkehrbar sind. Diese Hydromaschine 6 kann demnach sowohl als Hydropumpe als auch als Hydromaschine mit wechselnder Drehrichtung betrieben werden. In einem Verbindungsstrang 32 zwischen der Hydromaschine 6 und der elektrischen Maschine 10 ist eine Kupplung 34 angeordnet, so dass die Kraftkopplung im Fall einer Störung im Netz 12 oder im Wandlerbereich getrennt werden kann. Diese Kupplung 34 ist üblicherweise mit Federungs- und Dämpfungswirkung ausgeführt, so dass schlagartige Drehmomentschwankungen vergleichmäßigbar sind.

Wie bereits erwähnt, ist der Hydraulikkreislauf mit dem Gleichgangzylinder 4 und der Hydromaschine 6 als geschlossener Kreislauf ausgeführt. Zur Vermeidung von Kavitationen sind in beiden Druckleitungen 28, 30 jeweils Hydrospeicher 36, 38 vorgesehen, die über den Gleichgangzylinder 4 geladen werden und im Fall einer sehr schnellen Vergrößerung eines der Ringräume 24, 26 Druckmittel nachströmen lassen.

Über den Regelkreis 8 soll in Abhängigkeit vom Wellenklima (siehe Figur 2) der Kolben 22 des Gleichgangzylinders 4 mit einer Kraft F beaufschlagt werden, deren Verlauf ähnlich unregelmäßig wie der Verlauf der Kraft F_{W} gemäß Figur 2 ist. Diese Kraft F_{W} wird in Abhängigkeit vom Wellenklima, d.h. in Abhängigkeit von dem abgespeicherten F-t-Verlauf berechnet und dann als Sollgröße im Regelkreis 8 verarbeitet. Wie in Figur 1 angedeutet, kann diese Sollgröße F auch aus der über einen geeigneten Aufnehmer ermittelten Bewegungsgeschwindigkeit v des Kolbens 22 und einem Dämpfungsparameter beta berechnet werden, wobei dann F = v x beta. In diesem Fall ist beta ebenfalls in Abhängigkeit vom Wellenklima (Figur 2) in einem Datenspeicher einer in Figur 1 nicht dargestellten elektronischen Steuereinheit des Wandlers 1 abgelegt. Das Ergebnis der vorgenannten Berechnung ist dann wiederum die Sollkraft F.

Beim dargestellten Ausführungsbeispiel wird der sich in den Ringräumen 24, 26 einstellende Druck über Druckaufnehmer 37, 39 erfasst und die entsprechenden Drücke p_{A} und p_{B} als Ist-Größen einem Kraftregler 40 zugeführt, der beispielsweise als p-Regler ausgeführt ist. Im Kraftregler 40 wird aus den erfassten Drücken und den Wirkflächen des Kolbens 22 die Ist-Kraft F_{IST} berechnet und mit der Soll-Kraft F verglichen und bei einer Abweichung ein Ausgangssignal an die Verstellpumpe 6 abgegeben, so dass deren Schwenkwinkel alpha verstellt wird. Die Verstellung des Schwenkwinkels alpha erfolgt so lange bis die auf den Kolben 22 wirksame Kraft gleich der Sollkraft F ist. Diese Kraft ist in Abhängigkeit vom Wellenklima so gewählt, dass eine optimale Umsetzung der kinetischen Wellenenergie in hydraulische Energie erfolgt, so dass der Wirkungsgrad der Anlage bei minimalem vorrichtungstechnischem Aufwand optimiert ist.

Bei Erreichen eines der beiden Totpunkte des Kolbens 22 wird über den Kraftregler 40 der Schwenkwinkel alpha der Verstellpumpe 6 über 0 verstellt, so dass bei der Umkehrung der Bewegungsrichtung des Kolbens 22 die Drehrichtung der Verstellpumpe 6 unverändert bleibt. Durch dieses Über-Null-Verstellen der Verstellpumpe 6 kann auf einen hydraulischen oder elektronischen Gleichrichter wie beim eingangs beschriebenen Stand der Technik verzichtet werden, so dass der Aufbau weiter vereinfacht ist. Die sich bei dieser Regelung im Verbindungsstrang 32 einstellende Leistung ist in Figur 3 dargestellt. Demgemäß ist diese an den Generator zur Stromerzeugung abgegebene Leistung ebenfalls - wie das Wellenklima - schwankend, jedoch gleichgerichtet, wobei die integrierte mechanische Energie, die über den Generator in elektrische Energie umgewandelt wird, aufgrund der optimierten Kraftregelung des Gleichgangzylinders 4 gegenüber herkömmlichen Lösungen hoch ist.

Zur Glättung des Drehmomentverlaufes kann im Verbindungsstrang 32 eine gestrichelt angedeutete Schwungmasse 42 angeordnet sein, über die Drehmomentschwankungen im Verbindungsstrang 32 geglättet werden können. In diesem Fall sollte die elektrische Maschine 10 als Asynchronmaschine ausgeführt sein, da eine derartige Asynchronmaschine einen Schlupf erlaubt, der durch das Massenträgheitsmoment der Schwungmasse 42 entsteht.

Prinzipiell können jedoch auch Synchronmaschinen verwendet werden, wobei die Blindleistung jeweils aus dem angeschlossenen Stromnetz 12 entnommen wird und die über den Wellengenerator erzeugte elektrische Energie als elektrische Wirkleistung in das Netz 12 geliefert wird. Beim beschriebenen Ausführungsbeispiel soll die Drehzahl des Generators 10 durch die Frequenz des Netzes 12 vorgegeben sein, so dass der Generator beispielsweise bei einem 50 Hz-Netz mit etwa 1700 Umdrehungen/Minute dreht. Eine Drehzahlregelung im Sinne der eingangs beschriebenen Lösungen ist nicht erforderlich.

Bei sehr niedrigem Wellengang und entsprechend geringen, im geschlossenen Hydraulikkreislauf umgepumpten Druckmittelvolumenströmen könnte es vorkommen, dass der Hydromotor 6 die elektrische Maschine 10 abbremsen würde. In diesem Fall wirkt jedoch die elektrische Maschine 10 als Motor und entsprechend die Hydromaschine 6 als Pumpe, so dass Druckmittel entsprechend des eingestellten Schwenkwinkels alpha in einen der Ringräume 24, 26 gefördert wird, um den Kolben 22 in eine entsprechende Richtung zu verschieben/beschleunigen. D.h. je nach Wellenklima können die Hydromaschine 6 und die elektrische Maschine 10 sowohl als Motor/Generator oder als Pumpe/Motor wirken.

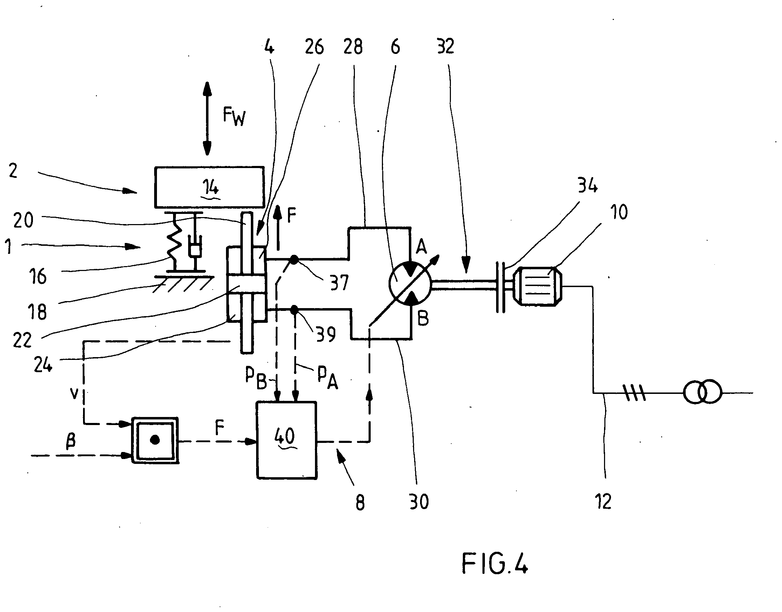

Figur 4 zeigt eine gegenüber dem Wandler 1 in Figur 1 vereinfachte Variante, bei der die beiden Hydrospeicher 36, 38 in den Druckleitungen 28, 30 sowie die Schwungmasse 42 weggelassen sind. Es zeigte sich überraschender Weise, dass ein derartiger Wandler besser beherrschbar ist, da er ein stabileres Regelverhalten zeigt. Im Übrigen entspricht das Ausführungsbeispiel gemäß Figur 4 demjenigen aus Figur 1, so dass weitere Erläuterungen entbehrlich sind.

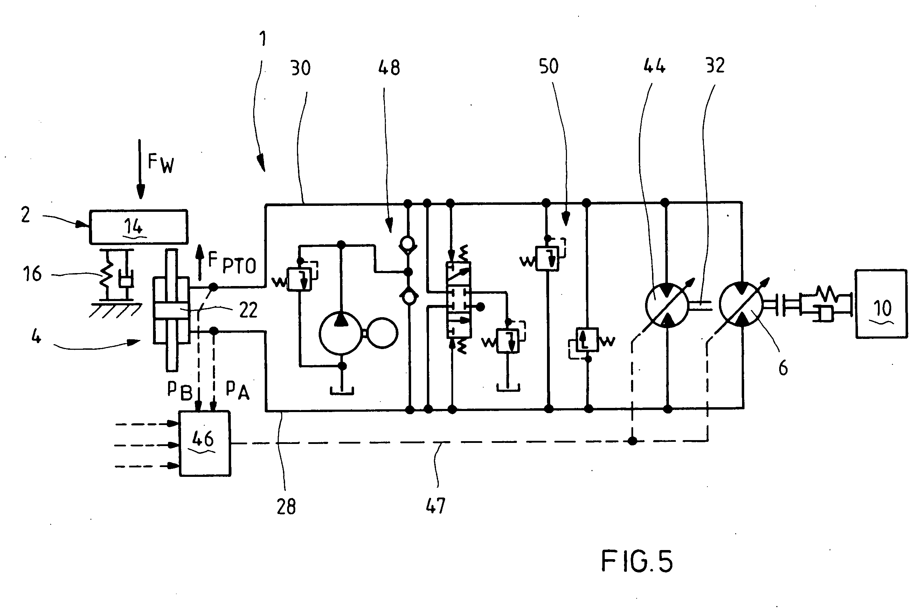

Figur 5 zeigt eine Variante des Wandlers gemäß den Figuren 1 und 4, bei der anstelle einer einzigen, vergleichsweise großen Hydromaschine zwei kleinere

Hydromaschinen 6, 44 verwendet werden. Diese sind wiederum als über Null verschwenkbare Axialkolbenmaschinen, beispielsweise des von der Anmelderin vertriebenen Typs A4V ausgeführt ist.

Die Ansteuerung dieser beiden kleinen Hydromaschinen 6, 44 erfolgt wiederum über einen Regler 46, der wiederum als Kraftregler ausgeführt ist. Die beiden Hydromaschinen 6, 44 stehen gemeinsam in Wirkverbindung mit dem Verbindungsstrang 32, so dass der Generator 10 durch beide Hydromaschinen 6, 44 gleichzeitig angetrieben wird.

Die Einstellung der Schwenkwinkel alpha der beiden Hydromaschinen 6, 44 erfolgt in Abhängigkeit von einem einzigen Ausgangssignal der Regeleinheit 46, über das Stellgeräte zur Verstellung der Schwenkwinkel der beiden Hydromaschinen 6, 44 synchron angesteuert werden. Dieses Steuersignal wird über eine Signalleitung 48 an die beiden Stellgeräte zur elektrohydraulischen Verstellung des Schwenkwinkels angelegt. Derartige Stellgeräte werden von der Anmelderin unter der Produktbezeichnung HS4 vertrieben, so dass hinsichtlich der Funktion auf die diesbezüglichen Ausführungen unter www.boschrexroth.de verwiesen werden kann.

Der Grundaufbau des Wandlers ist im Bereich des Schwimmkörpers 2, der Kolbenpumpe 4 (Gleichgangzylinder) und der elektrischen Maschine 10 im Wesentlichen identisch mit den entsprechenden Bauelementen der eingangs beschriebenen Wandler gemäß den Figuren 1 und 4, so dass zur Vermeidung von Wiederholungen auf diese Ausführungen verwiesen wird.

Bei dem in Figur 5 dargestellten Wandler ist zum Austausch des Druckmittels, zur Vermeidung von Kavitationen und zum Ausgleich von Leckageverlusten eine Speisespüleinheit 48 vorgesehen. Des Weiteren ist die Betriebssicherheit des Wandlers durch eine Druckabsicherung 50 verbessert.

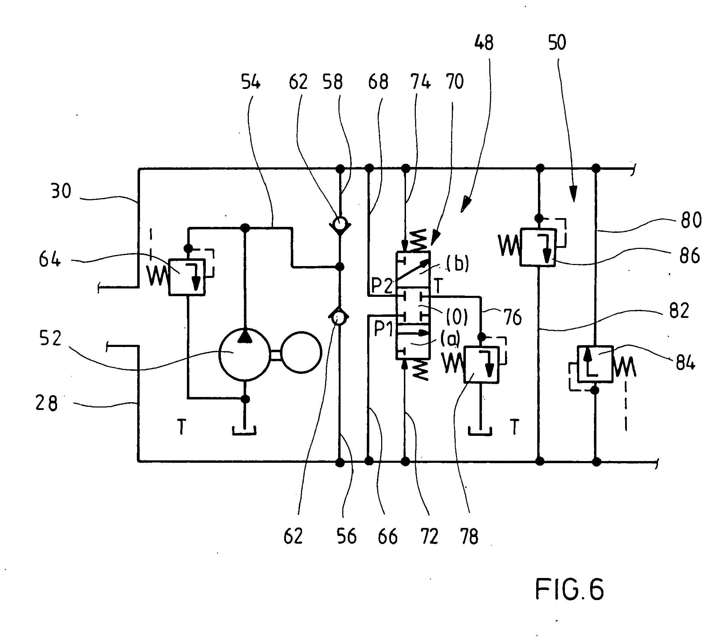

Der konkrete Aufbau der Speisespüleinheit 48 und der Druckabsicherung 50 wird anhand Figur 6 erläutert. Diese zeigt die beiden Einheiten 48, 50 in vergrößerter Darstellung. Beim Betrieb des Wandlers 1 wechseln aufgrund der oszillierenden Bewegung des Schwimmkörpers 2 die Hochdruck- und die Niederdruckseite in den Druckleitungen 28, 30 ständig und mit vergleichsweise hoher Frequenz. Bei ungünstigen Bedingungen kann es dabei vorkommen, dass niederdruckseitig Kavitationen auftreten. Diese Kavitationen können durch die Speisespüleinheit 48 verhindert werden. Der Grundaufbau einer derartigen Speisespüleinheit 48 ist bereits beispielsweise in der DE 10 2005 051 324 A1 oder in der nachveröffentlichten DE 10 2007 018 600 beschrieben, so dass hier nur die zum Verständnis der erforderlichen Bauelemente beschrieben werden.

Die Speisespüleinheit 48 hat eine als Konstantpumpe ausgeführte Speisepumpe 52, deren Druckanschluss über eine sich verzweigende Druckleitung 54 mit den Druckleitungen 28, 30 verbunden ist. In den beiden mit den Druckleitungen 28 und 30 verbundenen Zweigen 56, 58 ist jeweils ein in Richtung zur jeweiligen Druckleitung 28 bzw. 30 öffnendes Rückschlagventil 60 bzw. 62 vorgesehen. Über diese Speisepumpe 52 kann bei Druckabfall in einer der Druckleitungen 28, 30 Druckmittel aus einem Tank T in die jeweilige Niederdruckseite gefördert werden. Diese Speisepumpe 52 dreht mit konstanter Drehzahl, wobei der Maximaldruck durch ein Speisedruckbegrenzungsventil 64 begrenzt ist, so dass bei Überschreiten des an diesem eingestellten Drucks die Konstantpumpe 52 im Umlauf fördert.

Parallel zu den beiden Zweigen 56, 58 führen von den Druckleitungen 28, 30 zwei Spülleitungen 66, 68 weg, die zu Eingangsanschlüssen P1, P2 eines Spülventils 70 geführt sind. Dieses ist bei der dargestellten Ausführung als 3-Wege-Schaltventil ausgeführt, das in seiner Feder vorgespannten Grundposition (0) die Verbindung von den beiden Eingangsanschlüsse P1, P2 zu einem Tankanschluss T absperrt. Die Betätigung des Spülventils 70 erfolgt über jeweils eine an die Druckleitung 28 bzw. 30 angeschlossene Spülsteuerleitung 72 bzw. 74. Der in der Spülsteuerleitung 72 wirkende Steuerdruck beaufschlagt das Spülventil 70 in Richtung einer Schaltstellung (a), in der der Eingangsanschluss P2 mit dem Tankanschluss T verbunden ist und der weitere Eingangsanschluss P1 abgesperrt ist. Der Druck in der Spülsteuerleitung 74 beaufschlagt entsprechend einen Ventilschieber des Spülventils 70 in Richtung einer Schaltstellung (b), in der dann der Druckanschluss P2 abgesperrt und der Druckanschluss P1 mit dem Tankanschluss T verbunden ist. Letzterer ist über eine Tankleitung 76 und ein darin angeordnetes Druckbegrenzungsventil 78 mit dem Tank T verbunden. Das Druckbegrenzungsventil 78 ist so eingestellt, dass bei Überschreiten eines bestimmten Druckes in der Tankleitung 76 bei umgeschaltetem (Schaltstellungen (a), (b)) Spülventil 70 ein geringer Druckmittelvolumenstrom zum Tank T abströmen kann, der jedoch über die Speisepumpe 52 sofort ersetzt wird, so dass keinerlei Druckmittelverluste auftreten. Dadurch wird das Druckmittel im Druckmittelkreislauf kontinuierlich ausgetauscht, so dass eine Erwärmung des Druckmittels und damit ein Absinken des Wirkungsgrades des Wandlers verhindert werden kann.

Zur Absicherung der Druckleitungen 28, 30 ist die Druckabsicherung 50 vorgesehen. Diese hat gemäß der Darstellung in Figur 6 zwei parallel geschaltete, die beiden Druckleitungen 28, 30 verbindenden Entlastungsleitungen 80, 82, in denen jeweils ein als Druckbegrenzungsventil ausgeführtes Druckabsicherungsventil 84, 86 angeordnet ist, wobei das Druckabsicherungsventil 86 den Druck in der Druckleitung 30 und das Druckabsicherungsventil 84 entsprechend den Druck in der Druckleitung 28 begrenzt und bei Überschreiten dieses Maximaldrucks eine Druckmittelverbindung zur jeweils anderen Druckleitung aufsteuert.

Selbstverständlich kann die Speisespüleinheit 48 und/oder die Druckabsicherung 50 auch bei den vorbeschriebenen Ausführungsbeispielen gemäß den Figuren 1 und 4 verwendet werden.

Ähnlich wie beim vorbeschriebenen Ausführungsbeispiel werden die beiden Hydromaschinen 6, 44 kraftgeregelt angesteuert, so dass eine auf den Gleichgangzylinder 4 wirkende Kraft eingeregelt wird, die in Abhängigkeit vom Wellengang und somit vom Hub x, der Geschwindigkeit xp und der Beschleunigung xpp des Kolbens 22 des Gleichgangzylinders 4 abhängt, so dass über den Generator 10 eine vergleichsweise hohe elektrische Leistung ins Netz eingespeist werden kann.

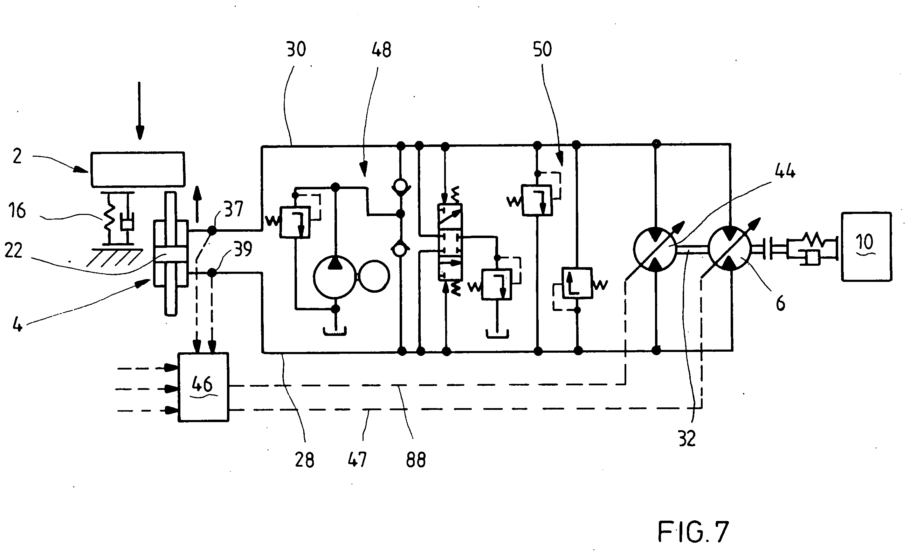

Bei dem Ausführungsbeispiel gemäß den Figuren 5 und 6 ist eine Hydromaschinenanordnung mit zwei kleinen Hydromaschinen 6, 44 verwendet, die synchron über die Regeleinheit 46 angesteuert werden. Das in Figur 7 dargestellte Ausführungsbeispiel unterscheidet sich vom Ausführungsbeispiel gemäß den Figuren 5 und 6 lediglich darin, dass die beiden Hydromaschinen 6, 44 unterschiedlich angesteuert werden. Der sonstige Aufbau mit dem Schwimmkörper 2, dem Gleichgangzylinder 4, den Druckleitungen 28, 30, der Speisespüleinheit 48 und der Druckabsicherung 50 sowie dem Aufbau des Generators 10 entspricht den vorbeschriebenen Ausführungsbeispielen, so dass im Folgenden nur die Unterschiede des Wandlers 1 gemäß Figur 7 zu den vorbeschriebenen Wandlern erläutert werden.

Die Hydromaschinen 6, 44 sind identisch mit den zuvor beschriebenen Hydromaschinen, ein Unterschied besteht lediglich regelseitig. Von der Regeleinheit 46 wird - wie eingangs beschrieben - in Abhängigkeit von den Drücken in den Druckräumen des Gleichgangzylinders 4, vom Weg x des Schwimmkörpers 2 oder des Kolbens 22, von dessen Verfahrgeschwindigkeit oder dessen Beschleunigung jeweils ein dem einzustellenden Schwenkwinkel entsprechendes Ausgangssignal erzeugt, das jeweils über eine Signalleitung 47 bzw. 88 zu dem jeweiligen den Hydromaschinen 6, 44 zugeordneten Stellgerät (HS4) geführt ist. D.h. über die Regeleinheit 46 wird ein jeweils einer Hydromaschine 6, 44 zugeordnetes Schwenkwinkelsignal alpha 1, alpha 2 generiert. Gemäß einer Regelstrategie ist es dabei vorgesehen, dass zunächst die zweite Hydromaschine 44 auf Null verschwenkt ist und der Gleichgangzylinder 4 lediglich über die Kraft geregelte Hydromaschine 6 mit einer vorbestimmten, von den Wellencharakteristika abhängigen Kraft beaufschlagt ist. Sobald die Hydromaschine 6 voll ausgeschwenkt ist und der durch die Bewegung des Gleichgangzylinders 4 generierte Druckmittelvolumenstrom und die einzuregelnde Kraft weiter ansteigen, wird auch zusätzlich die zweite Hydromaschine 44 angesteuert. Prinzipiell ist es jedoch nicht erforderlich, die beiden Hydromaschinen 6, 44 mit einer derartigen Kaskadensteuerung anzusteuern, sondern das Ansteuern eines oder beider Hydromaschinen 6, 44 kann auch in Abhängigkeit anderer Betriebsparameter unterschiedlich oder synchron erfolgen.

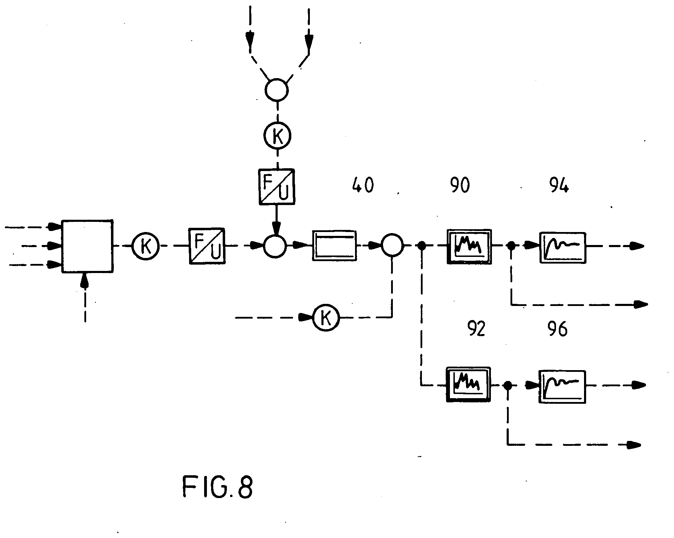

Figur 8 zeigt den Regelkreis des in Figur 7 dargestellten Wandlers, wobei diese Regelung als offener Regelkreis ausgeführt ist.

Gemäß Figur 8 wird zunächst in Abhängigkeit von den Bewegungsparametern x, xp, xpp sowie dem das Wellenklima wiedergebenden Kennwert beta eine auf den Gleichgangzylinder 4 wirkende Sollkraft FSOLL bestimmt und ein entsprechendes Spannungssignal erzeugt. Über die beiden Druckaufnehmer 37, 39 werden die Drücke pA und pB erfasst und aus der resultierenden Druckdifferenz und der wirksamen Kolbenfläche A die wirkende hydraulische Kraft FIST berechnet. Die Differenz zwischen der Sollkraft FSOLL und der Ist-Kraft FIST wird dann dem Kraftregler 40 zugeführt, der beispielsweise als P-Regler ausgeführt ist. In Abhängigkeit von dem Vergleich der Ist-Kraft FIST und der Soll-Kraft FSOLL wird dann vom Kraftregler 40 ein Ausgangssignal abgegeben. Bei der Regelstrategie gemäß Figur 8 wird jedoch nicht - wie bei den eingangs beschriebenen Lösungen - dieses Ausgangssignal direkt in einen Schwenkwinkel zur Verstellung der zugeordneten Hydromaschine umgesetzt, sondern es erfolgt eine Art Steuergrößeraufschaltung, wobei aus der Geschwindigkeit xp des Kolbens 22 und der Kolbenfläche das im Gleichgangzylinder 4 verschobene Druckmittelvolumen berechnet wird und dann entsprechend ein Schwenkwinkel alpha0 direkt berechnet wird, der theoretisch an der zugeordneten Hydromaschine eingestellt werden muss, um diese auf ein entsprechendes Schluckvolumen einzustellen. Dieser Wert alpha0 gibt dann die von der Geschwindigkeit xp abhängige Grundeinstellung des Schwenkwinkels vor, die dann zur Einspannung des Gleichgangzylinders 4 durch den über den Kraftregler 40 generierten Wert korrigiert wird. D.h. der Pilot-Schwenkwinkel alpha0 wird dann entsprechend dem Ausgangssignal des Kraftreglers 40 verringert, um die Kraft FSOLL einzuregeln. Es zeigte sich, dass diese Störgrößenaufschaltung - auch Pilotregelung genannt - zu einem sehr stabilen Regelsystem führt, da über den Kraftregler 40 lediglich eine kleine, der einzuregelnden Kraft entsprechende Schwenkwinkeldifferenz vorgegeben werden muss. Das über die Störgrößenaufschaltung erzeugte Signal wird dann noch mittels einer nicht linearen Adaption 90, 92 individuell für jede Hydromaschine 6, 44 angepasst. Das nach der Adaption, für jede Hydromaschine 6, 44 unterschiedlich vorliegende Steuersignal wird dann an das HS4-Schwenkwinkelstellgerät 94, 96 der Hydromaschine 6 bzw. der Hydromaschine 44 angelegt und entsprechend der Schwenkwinkel alpha6act für die Hydromaschine 6 und der Schwenkwinkel alpha44act der Hydromaschine 44 eingestellt. Zur Optimierung der Regelung kann das an das jeweilige Stellgerät 94, 96 abgegebene Sollsignal alpha6nom bzw. alpha44nom erfasst und mit den tatsächlich eingestellten Schwenkwinkel verglichen und ggf. der Schwenkwinkel nachgeführt werden.

Es zeigte sich, dass sich mit einer Kraftregelung gemäß der vorbeschriebenen Regelstrategie ein sehr stabiles Hydrauliksystem einstellt, wobei der Wirkungsgrad des Wandlers bei Testversuchen höher als bei den Varianten gemäß den Figuren 1 und 4 liegt. Die Abweichungen zwischen den Schwenkwinkel-Sollwerten (alpha6/44hom) und den Schwenkwinkel-Istwerten (alpha6/44act) sind minimal, wobei der Wirkungsgrad bei einem in Kaskadenschaltung betriebenen System optimal ist.

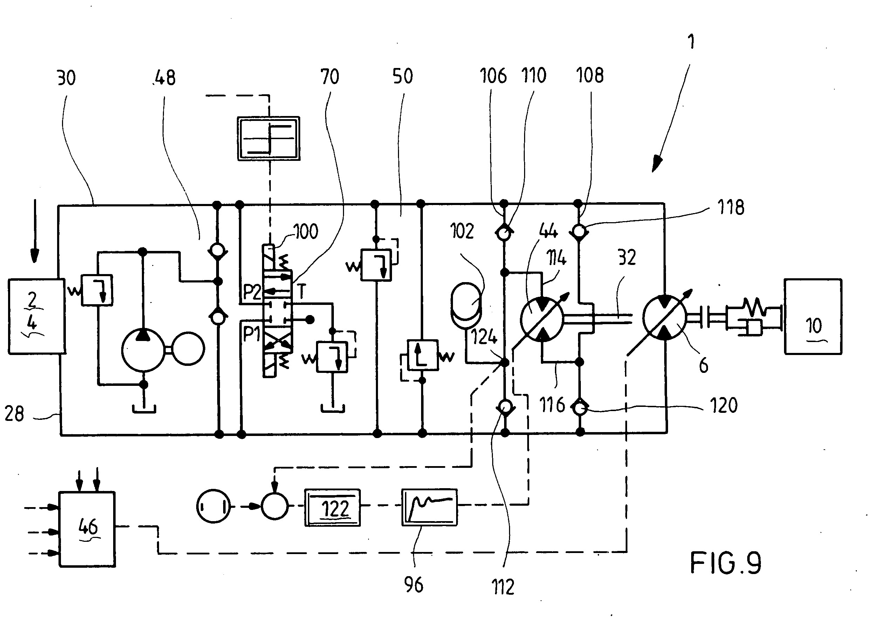

Figur 9 zeigt ein Ausführungsbeispiel eines Wandlers 1, dessen Grundaufbau demjenigen aus Figur 7 entspricht. In der Darstellung gemäß Figur 9 wurde auf die Einzeldarstellung des Schwimmkörpers 2 und des Gleichgangzylinders 4 verzichtet und diese Bauelemente lediglich angedeutet.

Die beiden Druckleitungen 28, 30 sind wie beim zuvor beschriebenen Ausführungsbeispiel mit den Anschlüssen zweier vergleichsweise kleiner Hydromaschinen 6, 44 verbunden, wobei letztere nicht über Null verschwenkbar sein muss. Beide Hydromaschinen 6, 44 wirken auf den gleichen Verbindungsstrang 32 um die elektrische Maschine 10 anzutreiben oder von dieser angetrieben zu werden.

Der Hydraulikkreislauf ist mit einer Speisespüleinheit 48 und einer Druckabsicherung 50 ausgeführt, deren Grundaufbau demjenigen aus Figur 6 entspricht. Es besteht lediglich ein Unterschied im Aufbau der Spülventile 70. Bei dem in Figur 9 dargestellten Ausführungsbeispiel wird das Spülventil 70 nicht vom Druck in den Druckleitungen 28, 30 sondern über Elektromagnete 98, 100 verstellt. Deren Ansteuerung erfolgt über die Regeleinheit 46 in Abhängigkeit von der Bewegungsgeschwindigkeit xp des Kolbens 22 des Gleichgangzylinders 4.

Das Spülventil 70 ist mittels einer Federanordnung in seine Sperrstellung (0) vorgespannt, in der die Anschlüsse P1, P2 und T gegeneinander abgesperrt sind. Bei Bestromung des in Figur 9 oben liegenden Elektromagneten 100 wird das Spülventil 70 in seine Schaltposition (a) umgestellt, in der der Eingangsanschluss P2 mit dem Tankanschluss T verbunden ist. Der Eingangsanschluss P1 ist dann gesperrt. Bei Bestromung des anderen Elektromagneten 98 wird das Spülventil 70 in die Schaltposition (b) verstellt, in der der Eingangsanschluss P1 mit dem Tankanschluss T verbunden und der andere Eingangsanschluss P2 abgesperrt ist. Der Druckmittelaustausch wird somit durch Bestromung der Elektromagnete 98, 100 gesteuert - prinzipiell besteht jedoch kein wesentlicher Unterschied zum Ausführungsbeispiel gemäß Figur 8, so dass weitere Erläuterungen entbehrlich sind. Anstelle der Elektromagnete 98,100 können auch andere Stellglieder verwendet werden.

Während bei dem in Figur 7 dargestellten Ausführungsbeispiel eine Regeleinheit 46 beiden Hydromaschinen 6, 44 zugeordnet ist, wird beim Ausführungsbeispiel gemäß Figur 9 der Schwenkwinkel der Hydromaschine 6 über eine als Kraftregler ausgeführte Regeleinheit 46 in Abhängigkeit von den Parametern x, xp, xpp, pB und pA verstellt, um den Gleichgangzylinder 4 mit einer vorbestimmten Kraft einzuspannen oder zu beaufschlagen. Die Verstellung des Schwenkwinkels alpha6 der Hydromaschine 6 nach einer Kraftregelung unterscheidet sich prinzipiell nicht von den zuvor beschriebenen Ausführungsbeispielen. Die zweite Hydromaschine 44 ist Drehmoment geregelt. Dementsprechend wird der Schwenkwinkel der Hydromaschine 44 so verstellt, dass sich im Verbindungsstrang 32 zum Generator 10 stets ein annähernd gleiches Drehmoment ergibt.

Der zweiten Hydromaschine 44 ist hochdruckseitig ein Hydrospeicher 102 zugeordnet. Da Hochdruck- und Niederdruckseite bei einem derartigen Wandler 1 ständig wechseln, muss dieser Hydromaschine 44 zusätzlich noch ein hydraulischer Gleichrichter 104 zugeordnet sein. Derartige hydraulische Gleichrichter sind bekannt und können beispielsweise durch ein Wegeventil oder - wie beim dargestellten Ausführungsbeispiel - durch eine Rückschlagventilanordnung ausgeführt sein. Bei dem in Figur 9 dargestellten Ausführungsbeispiel sind hochdruckseitig die beiden Druckleitungen 28, 30 über eine Hochdruckleitung 106 und niederdruckseitig über eine Niederdruckleitung 108 miteinander verbunden. In der Hochdruckleitung 106 sind zwei in Richtung zur Druckleitung 30 bzw. in Richtung zur Druckleitung 28 sperrende Hochdruckrückschlagventile 110, 112 angeordnet, zwischen denen ein Zulaufleitung 114 zum Zulaufanschluss der Hydromaschine 44 abzweigt. Deren Ablaufanschluss ist über eine Ablaufleitung 116 mit einem Leitungsabschnitt der Niederdruckleitung 108 verbunden, der zwischen zwei Niederdruckrückschlagventilen 118, 120 angeordnet ist, die jeweils zu den benachbarten Druckleitungen 28, 30 hin öffnen. Durch diesen über die Rückschlagventilanordnung 110, 112, 118, 120 gebildeten hydraulischen Gleichrichter ist sichergestellt, dass in der Zulaufleitung 114 stets der höhere der Drücke in den Druckleitungen 28, 30 anliegt. Der Hydrospeicher 102 ist dabei an den Leitungsabschnitt zwischen den beiden Hochdruckrückschlagventilen 110, 112 angeschlossen. Aufgrund dieses Gleichrichters ist es nicht erforderlich, die Hydromaschine 44 über Null verstellbar auszuführen. Anstelle der Rückschlagventilanordnung kann auch ein Wegeventil verwendet werden, wie es beispielsweise in der nachveröffentlichten Anmeldung DE 10 2007 018 600 beschrieben ist.

Die Einstellung des Schwenkwinkels alpha44 der Hydromaschine 44 erfolgt über einen eigenen Regler, der in Figur 9 schematisch dargestellt ist. Prinzipiell erfolgt die Ansteuerung der Hydromaschine 44 in einer Drehmoment-Regelung, wobei der Schwenkwinkel alpha44 so eingestellt wird, dass auf den Verbindungsstrang 32 ein etwa gleich bleibendes Drehmoment wirkt. Der Regelkreis für die Drehmoment-Regelung ist in der Darstellung gemäß Figur 9 nicht dargestellt und kann entsprechend der vorbeschriebenen Ausführungsbeispiele ausgeführt sein.

Der Drehmomentregelung der Hydromaschine 44 ist eine Druckregelung überlagert. Dazu verstellt die in Figur 9 dargestellte Regeleinheit 122 den Schwenkwinkel alpha44 so, dass sich am Zulauf der Hydromaschine 44 und damit auch im Hydrospeicher 102 ein vorbestimmter Druck einstellt. Dieser Druck wird über einen Druckaufnehmer 124 erfasst und mit einem vorgegebenen, vom Wellenklima abhängigen Systemdruck pSYS verglichen. Die Differenz wird dann der Regeleinheit 122 zugeführt und deren Ausgangssignal an das Stellgerät 96 zur Verstellung des Schwenkwinkels alpha44 der Hydromaschine 44 angelegt.

Die beim Ausführungsbeispiel gemäß Figur 9 realisierte Regelstrategie wird anhand eines Wellenzyklus erläutert. Es sei angenommen, dass sich der Schwimmkörper 2 im Bereich eines Wellentals befindet. Entsprechend sind die vom Gleichgangzylinder 4 geförderten Druckmittelvolumenströme und die Kraftanforderungen relativ gering, so dass die Kraftregelung von der Hydromaschine 6 alleine durchgeführt werden kann. Die zweite Hydromaschine 44 entleert dabei gleichzeitig den zuvor aufgeladenen Hydrospeicher 102 und beaufschlagt den Verbindungsstrang 32 entsprechend der Drehmoment-Regelung mit einem definierten Drehmoment.

Bei der Bewegung des Schwimmkörpers 2 aus dem Wellental werden der Schwimmkörper 2 und der Kolben 22 des Gleichgangzylinders 4 vergleichsweise stark beschleunigt, so dass entsprechend die wirksame Kraft FW und der Druckmittelvolumenstrom über die Hydromaschine 6 ansteigen. In dem Moment, in dem selbst bei voll ausgeschwenkter Hydromaschine 6 deren Schluckvolumen kleiner ist als der vom Gleichgangzylinder 4 geförderte Druckmittelvolumenstrom, steigt der Druck im System an, so dass ein Teil dieses Druckmittelvolumenstroms über das hochdruckseitige Hochdruckrückschlagventil 110 oder 112 in den Hydrospeicher 102 strömt und diesen auflädt. Die Geschwindigkeit, mit der dieser Hydrospeicher 102 aufgeladen wird, hängt vom Schwenkwinkel alpha44 der zweiten Hydromaschine 44 ab - d.h. durch Verstellung des Schwenkwinkels alpha44 kann somit relativ zeitnah der Systemdruck eingestellt werden.

Bei der Weiterbewegung des Schwimmkörpers in Richtung Wellenberg sinken die vorbeschriebenen Druckmittelvolumenströme und die auf den Gleichgangzylinder wirkende Vorspannkraft wieder ab, so dass entsprechend über die Hydromaschine 6 wiederum die Kraftregelung übernommen werden kann, während die zweite Hydromaschine 44 den nun aufgeladenen Hydrospeicher 102 entleert und den Verbindungsstrang mit einem vorbestimmten Drehmoment beaufschlagt. Der Wellenzyklus kann nun von neuem beginnen.

Die einzelnen vorbeschriebenen Regelstrategien sind prinzipiell bei allen vorbeschriebenen Wandlern einsetzbar. Bei Wandleren mit mehreren kleinen Hydromaschinen, können diese synchron oder unabhängig voneinander in Abhängigleit von nahezu beliebigen Systemparametern angesteuert werden.

Offenbart ist ein Wandler mit einer von einer Naturkraft, beispielsweise Wellengang, mittelbar oder unmittelbar angetriebenen Pumpe, über die eine Hydromaschine antreibbar ist. Diese steht in Kraftkopplung mit einer elektrischen Maschine, die als Generator oder als Motor wirken kann. Erfindungsgemäß wird die auf die Pumpe wirkende Kraft in Abhängigkeit von Oszillationsparametern der Naturkraft über einen Regelkreis geregelt.

## Patentansprüche

1. Hydraulisch/elektrischer Wandler mit einer von einer Naturkraft angetriebenen Pumpe (4), über die eine Hydromaschinenanordnung antreibbar ist, die mit einer elektrischen Maschine (10) zur Umwandlung der mechanischen Energie in elektrische Energie gekoppelt ist, und mit einer verstellbaren Hydromaschine (6) der Hydromaschinenanordnung, **dadurch gekennzeichnet dass**
der Pumpe (4) ein Regelkreis (8) zugeordnet ist, über den die Hydromaschine (6) derart verstellbar ist, dass die Pumpe (4) mit einer vorbestimmten Kraft (F) oder einem vorbestimmten Druck beaufschlagbar ist.

2. Wandler nach Patentanspruch 1, wobei die Pumpe eine Kolbenpumpe, vorzugsweise ein Gleichgangzylinder (4) ist, dessen Druckräume (24, 26) jeweils über eine Druckleitung (28, 30) mit Anschlüssen der Hydromaschine (6) verbunden sind.

3. Wandler nach Patentanspruch 2, wobei in zumindest einer der Druckleitungen (28, 30) ein Hydrospeicher (36, 38) vorgesehen ist.

4. Wandler nach einem der vorhergehenden Patentansprüche, wobei die Hydromaschinenanordnung eine zweite Hydromaschine (44) zum Antreiben der elektrischen Maschine (10) hat.

5. Wandler nach Patentanspruch 4, wobei die zweite Hydromaschine (44) Drehmoment geregelt ist.

6. Wandler nach Patentanspruch 4 oder 5, wobei beide Hydromaschinen (6, 44) unterschiedlich ansteuerbar sind.

7. Wandler nach Patentanspruch 6, wobei die zweite Hydromaschine (44) nach Verstellen der ersten Hydromaschine (6) auf maximales Schluckvolumen ansteuerbar ist.

8. Wandler nach Patentanspruch 4 oder 5, wobei beide Hydromaschinen (6, 44) synchron angesteuert sind.

9. Wandler nach einem der Patentansprüche 4 bis 8 wobei der zweiten Hydromaschine (44) hochdruckseitig ein Druckspeicher (102) und ein hydraulischer Gleichrichter (104) zugeordnet sind.

10. Wandler nach einem der vorhergehenden Patentansprüche, mit einer Speisespüleinheit (48) zur Verbindung der Druckleitungen (28, 30) mit einem Tank (T) oder einer Speisepumpe (52).

11. Wandler nach einem der vorhergehenden Patentansprüche, mit einer Hochdruckabsicherung (50) zwischen den beiden Druckleitungen (28, 30).

12. Wandler nach einem der vorhergehenden Patentansprüche, wobei in einem Verbindungsstrang (32) zwischen der Hydromaschine (6, 44) und der elektrischen Maschine (10) eine Kupplung (34) vorgesehen ist.

13. Wandler nach Patentanspruch 4, wobei im Verbindungsstrang (32) eine Schwungmasse (42) vorgesehen ist.

14. Wandler nach einem der vorhergehenden Patentansprüche, wobei zumindest eine Hydromaschine (6, 44) im Vierquadrantenbetrieb betreibbar oder über Null verschwenkbar ist.

15. Wandler nach einem der vorhergehenden Patentansprüche, wobei die elektrische Maschine (10) mit etwa konstanter Drehzahl umläuft.

16. Wandler nach einem der vorhergehenden Patentansprüche, wobei die Naturkraft Wellengang ist, der auf einen Schwimmkörper (2) wirkt, über den die Pumpe (4) antreibbar ist.

17. Wandler nach einem der vorhergehenden Patentansprüche, wobei die Kraft (F) so eingestellt ist, dass das in Absenkrichtung wirkende Eigengewicht des Schwimmkörpers (2) kompensierbar ist.

18. Wandler nach einem der Patentansprüche 2 bis 17, mit Druckaufnehmern (37, 39) zur Bestimmung des Drucks in den Ringräumen (24, 26) der Kolbenpumpe (4).

19. Wandler nach einem der vorhergehenden Patentansprüche, wobei die elektrische Maschine (10) eine Asynchronmaschine ist.

20. Wandler nach einem der vorhergehenden Patentansprüche, mit einer Regeleinheit (46, 122) zur Verstellung eines oder beider Hydromaschinen (6, 44) der Hydromaschinenanordnung.

21. Verfahren zum Wandeln von mechanischer Energie in elektrische Energie mittels eines Wandlers (1) mit einer von einer Naturkraft angetriebenen Pumpe (4), über die eine in über Null verschwenkbare Hydromaschine (6, 44) angetrieben wird, die ihrerseits mit einer elektrischen Maschine (10) gekoppelt ist und mit einer Kraft-/Druckregelung der Pumpe (4), mit den Schritten:-Einstellen einer auf einen Kolben (22) der Pumpe (4) wirkenden Kraft (F) durch Verstellen der Hydromaschine (6, 44) in Abhängigkeit von Bewegungsparametern der Naturkraft.

22. Verfahren nach Patentanspruch 21, wobei die Regelung in Abhängigkeit von der Kolbengeschwindigkeit, vom Hub, vom Druck in den Druckräumen (24, 26) der Kolbenpumpe (4) und/oder von einer Amplitude und Frequenz der Naturkraft erfolgt.

23. Verfahren nach Patentanspruch 21 oder 22, wobei die Kraft durch Verstellen eines Schwenkwinkels (alpha) der Hydromaschine (6, 44) eingestellt wird.

24. Verfahren nach einem der Patentansprüche 21 bis 23, wobei die Kraft derart eingestellt wird, dass der Kolben (22) im Bereich seiner Totpunkte abgebremst wird.

25. Verfahren nach einem der Patentansprüche 21 bis 24, wobei die elektrische Maschine (10) über eine weitere Hydromaschine (44) angetrieben wird und beide Hydromaschinen (6, 44) synchron angesteuert werden.

26. Verfahren nach einem der Patentansprüche 21 bis 24, wobei die elektrische Maschine (10) über eine weitere Hydromaschine (44) angetrieben wird und beide Hydromaschinen (6, 44) unterschiedlich angesteuert werden.

27. Verfahren nach Patentanspruch 26, wobei eine Hydromaschine (6) kraftgeregelt und die zweite Hydromaschine (44) drehmomentgeregelt wird.

28. Verfahren nach Anspruch 26 oder 27, wobei der drehmomentgeregelten Hydromaschine (44) ein Hydrospeicher (102) und ein Gleichrichter zugeordnet ist und bei Einstellung der anderen Hydromaschine (6) auf maximales Schluckvolumen über den Schwenkwinkel der drehmomentgeregelten Hydromaschine (44) ein Systemdruck einregelbar ist, der auch im Hydrospeicher (102) wirkt.

29. Verfahren nach Anspruch 26, wobei bei geringem Druckmittelvolumenstrom zunächst nur die eine Hydromaschine (6) verstellt wird und etwa bei deren Verstellung auf maximales Schluck-/Fördervolumen die zweite Hydromaschine (44) angesteuert wird.

30. Verfahren nach einem der Patentansprüche 21 bis 29, wobei in das Steuersignal zur Ansteuerung der Hydromaschine (6, 44) ein Ausgangssignal einer Regeleinheit (46, 122) und ein Pilotwert zur Voreinstellung der Hydromaschine (6, 44) eingeht.

31. Verfahren nach Anspruch 30, wobei das aus dem Ausgangssignal und dem Pilotwert resultierende Steuersignal über eine nichtlineare Adaption in ein Steuersignal zur Verstellung einer Hydromaschine (6, 44) umgewandelt wird.

## Claims

1. Hydraulic/electric converter having a pump (4) which is driven by a natural force and by means of which a hydraulic machine arrangement can be driven, which hydraulic machine arrangement is coupled to an electric machine (10) for converting the mechanical energy into electrical energy, and having an adjustable hydraulic machine (6) of the hydraulic machine arrangement, **characterized in that** the pump (4) is assigned a closed control loop (8) by means of which the hydraulic machine (6) is adjustable such that the pump (4) can be acted on with a predetermined force (F) or a predetermined pressure.

2. Converter according to Patent Claim 1, wherein the pump is a piston pump, preferably a synchronous cylinder (4), the pressure chambers (24, 26) of which are in each case connected via a pressure line (28, 30) to ports of the hydraulic machine (6).

3. Converter according to Patent Claim 2, wherein a hydraulic accumulator (36, 38) is provided in at least one of the pressure lines (28, 30).

4. Converter according to one of the preceding patent claims, wherein the hydraulic machine arrangement has a second hydraulic machine (44) for driving the electric machine (10).

5. Converter according to Patent Claim 4, wherein the second hydraulic machine (44) is subjected to closed-loop torque control.

6. Converter according to Patent Claim 4 or 5, wherein the two hydraulic machines (6, 44) can be actuated differently.

7. Converter according to Patent Claim 6, wherein the second hydraulic machine (44) can, after adjustment of the first hydraulic machine (6), be actuated to maximum displacement volume.

8. Converter according to Patent Claim 4 or 5, wherein the two hydraulic machines (6, 44) are actuated synchronously.

9. Converter according to one of Patent Claims 4 to 8, wherein the second hydraulic machine (44) is assigned, at the high-pressure side, a pressure accumulator (102) and a hydraulic equalizer (104).

10. Converter according to one of the preceding patent claims, having a feed/purge unit (48) for connecting the pressure lines (28, 30) to a tank (T) or to a feed pump (52).

11. Converter according to one of the preceding patent claims, having a high-pressure relief means (50) between the two pressure lines (28, 30).

12. Converter according to one of the preceding patent claims, wherein a clutch (34) is provided in a connecting train (32) between the hydraulic machine (6, 44) and the electric machine (10).

13. Converter according to Patent Claim 4, wherein a centrifugal mass (42) is provided in the connecting train (32).

14. Converter according to one of the preceding patent claims, wherein at least one hydraulic machine (6, 44) is operable in four-quadrant mode, or is pivotable beyond dead centre.

15. Converter according to one of the preceding patent claims, wherein the electric machine (10) rotates at approximately constant rotational speed.

16. Converter according to one of the preceding patent claims, wherein the natural force is wave movement, which acts on a float body (2) by means of which the pump (4) can be driven.

17. Converter according to one of the preceding patent claims, wherein the force (F) is set such that the inherent weight, acting in a sinking direction, of the float body (2) can be compensated.

18. Converter according to one of Patent Claims 2 to 17, having pressure sensors (37, 39) for the determination of the pressure in the ring-shaped chambers (24, 26) of the piston pump (4).

19. Converter according to one of the preceding patent claims, wherein the electric machine (10) is an asynchronous machine.

20. Converter according to one of the preceding patent claims, having a closed-loop control unit (46, 122) for the adjustment of one or both hydraulic machines (6, 44) of the hydraulic machine arrangement.

21. Method for converting mechanical energy into electrical energy by means of a converter (1) having a pump (4) which is driven by a natural force, by means of which pump a hydraulic machine (6, 44) which is pivotable beyond dead centre is driven, which hydraulic machine in turn is coupled to an electric machine (10), and having closed-loop force/pressure control of the pump (4), having the steps:
setting a force (F) acting on a piston (22) of the pump (4) by adjustment of the hydraulic machine (6, 44) in a manner dependent on movement parameters of the natural force.

22. Method according to Patent Claim 21, wherein the closed-loop control is performed in a manner dependent on the piston speed, on the stroke, on the pressure in the pressure chambers (24, 26) of the piston pump (4) and/or on an amplitude and frequency of the natural force.

23. Method according to Patent Claim 21 or 22, wherein the force is set by adjustment of a pivot angle (alpha) of the hydraulic machine (6, 44).

24. Method according to one of Patent Claims 21 to 23, wherein the force is set such that the piston (22) is braked in the region of its dead centres.

25. Method according to one of Patent Claims 21 to 24, wherein the electric machine (10) is driven by means of a further hydraulic machine (44), and the two hydraulic machines (6, 44) are actuated synchronously.

26. Method according to one of Patent Claims 21 to 24, wherein the electric machine (10) is driven by means of a further hydraulic machine (44), and the two hydraulic machines (6, 44) are actuated differently.

27. Method according to Patent Claim 26, wherein one hydraulic machine (6) is subjected to closed-loop force control, and the second hydraulic machine (44) is subjected to closed-loop torque control.

28. Method according to Claim 26 or 27, wherein the hydraulic machine (44) that is subjected to closed-loop torque control is assigned a hydraulic accumulator (102) and an equalizer, and when the other hydraulic machine (6) is set to maximum displacement volume, a system pressure that also acts in the hydraulic accumulator (102) can be set with closed-loop control by means of the pivot angle of the hydraulic machine (44) that is subjected to closed-loop torque control.

29. Method according to Claim 26, wherein, in the case of a small pressure medium volume flow, initially only one hydraulic machine (6) is adjusted, and, for example in the event of the adjustment thereof to maximum displacement/delivery volume, the second hydraulic machine (44) is actuated.

30. Method according to one of Patent Claims 21 to 29, wherein an output signal of a closed-loop control unit (46, 122) and a pilot value for the presetting of the hydraulic machine (6, 44) are incorporated into the control signal for the actuation of the hydraulic machine (6, 44).

31. Method according to Claim 30, wherein the control signal that results from the output signal and the pilot value is converted, by means of a non-linear adaptation, into a control signal for the adjustment of a hydraulic machine (6, 44).

## Revendications

1. Convertisseur hydraulique/électrique présentant une pompe (4) entraînée par une force naturelle, pouvant entraîner un ensemble de machine hydraulique et accouplée à une machine électrique (10) pour convertir l'énergie mécanique en énergie électrique, l'ensemble de machine hydraulique présentant une machine hydraulique réglable (6),
**caractérisé en ce que**
un circuit de régulation (8), par lequel la machine hydraulique (6) peut être ajustée de telle sorte qu'une force (S) prédéterminée ou une pression prédéterminée puissent être appliquées sur la pompe (4), est associé à la pompe (4).

2. Convertisseur selon la revendication 1, dans lequel la pompe est une pompe à piston, de préférence un cylindre (4) à double effet dont chacun des espaces (24, 26) sous pression est relié à des raccords de la machine hydraulique (6) par un conduit sous pression (28, 30).

3. Convertisseur selon la revendication 2, dans lequel un accumulateur hydraulique (36, 38) est prévu dans au moins l'un des conduits (28, 30) sous pression.

4. Convertisseur selon l'une des revendications précédentes, dans lequel l'ensemble de machine hydraulique possède une deuxième machine hydraulique (44) qui entraîne la machine électrique (10).

5. Convertisseur selon la revendication 4, dans lequel le couple de rotation de la deuxième machine hydraulique (44) est régulé.

6. Convertisseur selon les revendications 4 ou 5, dans lequel les deux machines hydrauliques (6, 44) peuvent être commandées différemment.

7. Convertisseur selon la revendication 6, dans lequel de la deuxième machine hydraulique (44) peut être pilotée à un débit maximum d'aspiration après réglage de la première machine hydraulique (6).

8. Convertisseur selon les revendications 4 ou 5, dans lequel les deux machines hydrauliques (6, 44) sont commandées de manière synchronisée.

9. Convertisseur selon l'une des revendications 4 à 8, dans lequel une réserve (102) sous pression, un redresseur hydraulique (104) sont associés au côté haute pression de la deuxième machine hydraulique (44).

10. Convertisseur selon l'une des revendications précédentes, présentant une unité (48) de balayage d'alimentation qui relie les conduits (28, 30) sous pression à une cuve (T) ou une pompe d'alimentation (52).

11. Convertisseur selon l'une des revendications précédentes, présentant une protection (50) contre les surpressions entre les deux conduits (28, 30) sous pression.

12. Convertisseur selon l'une des revendications précédentes, dans lequel un embrayage (34) est prévu dans un parcours de liaison (32) situé entre la machine hydraulique (6, 44) et la machine électrique (10).

13. Convertisseur selon la revendication 4, dans lequel une masse d'inertie (42) est prévue dans le train de liaison (32).

14. Convertisseur selon l'une des revendications précédentes, dans lequel au moins une machine hydraulique (6, 44) peut être pilotée en fonctionnement à quatre cadrans ou être déphasée à plus de zéro.

15. Convertisseur selon l'une des revendications précédentes, dans lequel la machine électrique (10) tourne à une vitesse de rotation sensiblement constante.

16. Convertisseur selon l'une des revendications précédentes, dans lequel la force naturelle est celle des vagues et agit sur un corps flottants (2) qui permet d'entraîner la pompe (4).

17. Convertisseur selon l'une des revendications précédentes, dans lequel la force (F) est ajustée de telle sorte que le poids propre du corps flottant (2) puisse être compensé dans la direction d'abaissement.

18. Convertisseur selon l'une des revendications 2 à 17, présentant des capteurs de pression (37, 39) qui déterminent la pression qui règne dans les espaces annulaires (24, 26) de la pompe (4) à piston.

19. Convertisseur selon l'une des revendications précédentes, dans lequel la machine électrique (10) est une machine asynchrone.

20. Convertisseur selon l'une des revendications précédentes, présentant une unité de régulation (46, 122) qui permet d'ajuster l'une des deux ou les deux machines hydrauliques (6, 44) de l'ensemble de machines hydrauliques.

21. Procédé de conversion d'énergie mécanique en énergie électrique au moyen d'un convertisseur (1) doté d'une pompe (4) entraînée par une force naturelle et entraînant une machine hydraulique (6, 44) pouvant être déphasée au-delà de zéro et qui elle-même est accouplée à une machine électrique (10), ainsi qu'avec une régulation de la pompe (4) en force et/ou en pression, le procédé comportant l'étape qui consiste à ajuster une force (F) qui agit sur un piston (22) de la pompe (4) par réglage de la machine hydraulique (6, 44) en fonction des paramètres de déplacement de la force naturelle.

22. Procédé selon la revendication 21, dans lequel la régulation s'effectue en fonction de la vitesse du piston, de sa course, de la pression qui règne dans les espaces (24, 26) sous pression de la pompe (4) à piston et/ou de l'amplitude et de la fréquence de la force naturelle.

23. Procédé selon les revendications 21 ou 22, dans lequel la force est ajustée par réglage de l'angle de déphasage (alpha) de la machine hydraulique (6, 44).

24. Procédé selon l'une des revendications 22 à 23, dans lequel la force est réglée de telle sorte que le piston (22) soit freiné au niveau de ses points morts.

25. Procédé selon l'une des revendications 21 à 24, dans lequel la machine électrique (10) est entraînée par une autre machine hydraulique (44), les deux machines hydrauliques (6, 44) étant pilotées de manière synchronisée.

26. Procédé selon l'une des revendications 21 à 24, dans lequel la machine électrique (10) est entraînée par une autre machine hydraulique (44), les deux machines hydrauliques (6, 44) étant pilotées de manière différente.

27. Procédé selon la revendication 26, dans lequel la puissance de la machine hydraulique (6) et le couple de rotation de la deuxième machine hydraulique (44) sont régulés.

28. Procédé selon les revendications 26 ou 27, dans lequel un accumulateur hydraulique (102) et un redresseur sont associés à la machine hydraulique (44) régulée en couple de rotation et, lorsque l'autre machine hydraulique (6) est amenée à son débit d'aspiration maximum, une pression de système qui agit aussi dans l'accumulateur hydraulique (102) peut être régulée par l'intermédiaire de l'angle de phase de la machine hydraulique (44) régulée en couple de rotation.

29. Procédé selon la revendication 26, dans lequel lorsque le débit volumique de fluide sous pression est petit, seule la machine hydraulique (6) est ajustée, la deuxième machine hydraulique (44) n'étant pilotée que lorsque la première est amenée à son débit maximum d'aspiration ou de refoulement.

30. Procédé selon l'une des revendications 21 à 29, dans lequel un signal de sortie d'une unité de régulation (46, 122) et une valeur pilote pour le préréglage de la machine hydraulique (6, 44) interviennent dans le pilote qui commande la machine hydraulique (6, 44).

31. Procédé selon la revendication 30, dans lequel le signal pilote qui résulte du signal de sortie et de la valeur pilote est converti par adaptation non linéaire en un signal pilote qui ajuste une machine hydraulique (6, 44).
